# FASCICULE DE BREVET EUROPEEN

(11) **EP 0 385 872 B1**
(45) Date de publication et mention de la délivrance du brevet: **07.07.1993**
(21) Numéro de dépôt: 90400577.4
(22) Date de dépôt: 01.03.1990
(51) Int. Cl.: A63B 41/08

(54) **Ballons de sports ou de loisirs, comprenant une couche externe en mousse à peau intégrale et leur obtention**
Bälle für Sport oder Freizeit mit einer äusseren Beschichtung aus Integralschaum und ihre Herstellung
Sport or leisure balls comprising an external foam layer with an integral skin, and production thereof

(30) Priorité: 03.03.1989 FR 8902828
(43) Date de publication de la demande: 05.09.1990
(73) Titulaire: ADIDAS SARRAGAN FRANCE S.A.R.L., F-67700 Landersheim (FR)
(72) Inventeur: Sonntag, Jean-Marie, D-7640 Kehl 1 (DE); Casper, Jacques, F-67700 Gottenhouse (FR)
(74) Mandataire: Phélip, Bruno

(56) Documents cités:
- BE-A- 411 775
- FR-A- 1 488 920
- FR-A- 2 215 249
- FR-A- 2 572 674
- US-A- 1 614 853
- US-A- 4 462 590

## Description

L'invention appartient au domaine des articles de sports et de loisirs. Elle a plus particulièrement pour objet des ballons dont le revêtement externe possède une structure originale et avantageuse.

Les ballons les plus utilisés à l'heure actuelle appartiennent à deux grandes catégories: ceux comportant un revêtement externe constitué d'éléments cousus à la main, par exemple en cuir ou en une matière synthétique, telle que le polyuréthanne et ceux dans lesquels le revêtement n'est pas obtenu par une opération de couture manuelle, mais par application d'une couche externe, cette application pouvant d'ailleurs être réalisée par des moyens manuels ou mécaniques (par exemple au pistolet pour une composition à base de polyuréthanne). Les ballons de la deuxième catégorie sont, par opposition à ceux de la première, souvent dénommés ballons non cousus main.

Par ailleurs, la technique classique de fabrication des ballons consiste à utiliser une vessie interne, en général en caoutchouc, qui, la plupart du temps est maintenant enrobée d'un constituant textile en fibres ou filaments naturels ou synthétiques, ceux-ci étant par exemple enroulés progressivement sur la vessie. Pour assurer l'intégrité de la couche textile, on la combine à une composition, en général vulcanisable, notamment à base de caoutchouc naturel ou synthétique. Le revêtement externe final est ensuite appliqué sur cette composition.

On connaît aussi un autre type de ballon qui ne comporte pas de vessie, mais dont la carcasse interne est obtenue directement à partir d'une composition synthétique polymère, laquelle peut être mise en forme de manière classique, par moulage et plus particulièrement par rotomoulage, technique qui implique l'application de forces centrifuges. Celles-ci provoquent la dispersion rotationnelle de la composition polymère et la réalisation d'une coque creuse, à paroi plus ou moins régulière et dimensionnellement stable.

Les techniques qui viennent d'être mentionnées sont bien connues de l'homme du métier et n'ont donc pas besoin d'être décrites avec plus de détail .

On cherche en permanence à améliorer les caractéristiques des ballons et à simplifier leur technique de fabrication . Il convient notamment d'obtenir des ballons dont le comportement donne toute satisfaction à l'utilisateur , ayant une longévité élevée et pouvant être fabriqués d'une manière plus économique que les ballons traditionnels.

L'invention apporte une solution à ces divers problèmes techniques , en tirant profit des possibilités offertes par des produits synthétiques et en choisissant les caractéristiques de ceux-ci pour réaliser la couche externe des ballons.

L'invention a donc pour objet des ballons de sports ou de loisirs comprenant une couche externe en mousse à peau intégrale de polyuréthane ou polyuréthane - polyurée de caractéristiques déterminées, telles que décrites ci-après .

Selon l'invention l'expression " couche externe en mousse à peau intégrale " définit une couche comprenant un coeur microalvéolaire et une peau compacte de surface , avec une zone intermédiaire à cellules d'autant plus petites qu'on se rapproche de la surface et d'autant plus grandes et plus nombreuses qu on s'en éloigne .

On connaît déjà dans la technique des mousses à peau intégrale qui sont par exemple utilisées pour la construction automobile , l'industrie du meuble et de la chaussure . On connaît ainsi des mousses à peau intégrale semi-rigides ou souples , mais leurs caractéristiques ne conviennent pas pour la fabrication des ballons. Elles ont en effet une faible mémoire élastique et une température de transition vitreuse trop élevée (en général supérieure à - 40°C ).

Dans la technique antérieure, on a déjà proposé d'utiliser des mousses de polyuréthane dans la fabrication des ballons.

Par exemple le brevet FR N° 2.572.674 décrit le surmoulage d'une vessie ou carcasse interne , obtenue par rotomoulage , en injectant autour de cette carcasse une composition de polyuréthane sous forme de liquide polymérisable . Ce brevet antérieur enseigne une technique de fabrication de ballons avec une couche externe en matière alvéolaire mais il ne décrit aucunement une mousse à peau intégrale . Tout au contraire, si l'on se réfère aux conditions opératoires décrites , on constate que le liquide polymérisable est injecté à basse pression et que l'on chauffe le moule. Ces indications pratiques ne permettent pas de réaliser une mousse à peau intégrale et encore moins répondant aux caractéristiques physiques et aux paramètres qui sont indispensables, pour la fabrication des ballons, dans le cas de l'utilisation d'une mousse à peau intégrale .

Le brevet US 1.614 853 concerne la fabrication de balles de tennis . La carcasse interne de la balle est entourée d'une enveloppe mince en caoutchouc alvéolaire qui peut comporter une peau venue de moulage . Pour la réalisation finale de la balle , les pièces découpées dans l'enveloppe peuvent être collées sur la carcasse interne.Ce brevet , très ancien, ne mentionne pas l'utilisation de mousse en polyuréthane ou polyuréthane - polyurée à peau intégrale et surtout ne donne aucune indication sur les caractéristiques et paramètres physiques à obtenir pour la fabrication de ballons.

Le brevet US 4.462.590 est relatif à la fabrication de ballons, particulièrement de football américain comprenant une partie extérieure ou enveloppe et une couche-tampon qui améliore le "grip" et peut être constituée de polyuréthane alvéolaire . La description du brevet porte également sur la constitution de la vessie interne. Ce brevet décrit donc un ballon comportant une couche externe en deux éléments distincts , l'enveloppe externe proprement dite et la couche tampon . Il n'encourage pas l'homme du métier à réaliser un ballon avec une mousse à peau intégrale pouvant être obtenue en une seule fois.

Le brevet belge 411 755 illustre la réalisation de ballons en cuir , obtenus à partir de panneaux séparés et cousus. L'objet du brevet est de réaliser une structure avec languette , permettant d'accéder plus facilement à l'intérieur du ballon .

Le brevet français 1 488.920 décrit un procédé classique de fabrication de ballons à vessie, plus particulièrement de ballons de basket-ball . Les pièces de l'enveloppe externe en caoutchouc vulcanisé peuvent être obtenues à partir de plaques .

Le brevet US 3.112 521 décrit une machine très sophistiquée pour la fabrication de balles de golf . Il concerne plus particulièrement des moyens permettant la mise en place précise de la balle de golf à l'intérieur d'une cavité de moule , de manière à remplir cette cavité avec une composition d'un liquide polyuréthane , en formant ainsi une couche régulière à la périphérie de la balle .

Le brevet français 2 215 249 décrit la fabrication de ballons à panneaux en découpant ces derniers dans un compound préfabriqué .

On peut donc constater qu'aucun des documents illustratifs de la technique antérieure ne décrit ou ne suggère des ballons dont la couche externe est réalisée en mousse à peau intégrale en polyuréthane ou polyuréthane-polyurée et répondant à des caractéristiques physico-mécaniques bien déterminées . Parmi ces caractéristiques, on peut citer :
- l'épaisseur totale de la couche externe en tenant compte des proportions relatives de la peau compacte extérieure et du coeur microalvéolaire ,
- la densité moyenne de la couche externe , avec les valeurs respectives des densités de la peau compacte externe et de la zone microalvéolaire ,
- la structure de la zone microcellulaire ,
- l'ensemble des paramètres distinctifs d'une mousse à peau intégrale en polyuréthane ou polyuréthane - polyurée ,tels que : dureté Shore échelle A , déchirure amorcée en long , déchirure amorcée en travers , modules d'élasticité respectifs de la peau compacte et de la zone microalvéolaire, abrasion, prise d'eau statique .

La présente invention sélectionne la structure et les caractéristiques des mousses à peau intégrale pour permettre leur application à titre de couche externe dans les ballons de sports.

Les données caractéristiques de telles mousses peuvent varier selon les types de ballons et leurs conditions d'utilisation.Par exemple, l'épaisseur de la mousse à peau intégrale formant la couche externe du ballon pourra être différente selon qu'il s'agit d'un ballon cousu main ou au contraire d'un ballon non cousu main ou laminé ou encore d'un ballon surmoulé . De même , des variations sont possibles selon que les ballons sont destinés à la compétition (ballon haut de gamme ) ou à des utilisations moins exigeantes, notamment pour les loisirs et les jeux d'enfants . On peut aussi distinguer les ballons destinés aux sports en plein air de ceux mis en oeuvre pour la pratique des sports en salle . Les indications qui suivent sont destinées à guider l'homme du métier, mais on comprendra que des essais de routine peuvent , dans chaque cas particulier, permettre de définir les caractéristiques les meilleures pour la réalisation de la couche externe d'un ballon avec une mousse à peau intégrale .

Ainsi qu'on l'a dit précédemment , la couche externe comprend un coeur microcellulaire (ou micro-alvéolaire) et une peau compacte de surface. L'épaisseur de la peau compacte de surface est en général comprise entre 0,5 et 2 mm environ et de préférence entre 0,5 et 1 mm environ . L'épaisseur totale de la couche externe varie le plus généralement entre environ 1,5 et 5 mm et de manière appropriée elle est de l'ordre de 1,5 à 3 mm environ.

La densité moyenne de la peau compacte peut en général varier entre 0,9 et 1,2g/cm³, alors que la densité de la zone constituant le coeur micro-cellulaire est d'environ 0,3 à 0,9 g/cm³ . Ainsi , la densité de la zone voisine de la surface est d'environ 2,5 à 3 fois celle de la zone micro-cellulaire.La densité moyenne de la couche externe varie entre 0,4 et 0,6 g/cm³ environ.

Pour les ballons destinés à la pratique des sports en plein air , il est important que la structure micro-cellulaire comporte des pores très peu communiquants et de préférence fermés dans leur grande majorité . Ceci permet de conserver le poids du ballon même sur terrain détrempé , car en raison de sa structure à pores en majorité fermés , il n'y a que peu ou pas d'absorption d'eau, ce qui permet de maintenir pratiquement constant le poids du ballon. L'homme du métier dispose de moyens pour aboutir à un tel résultat , ainsi qu'on l'illustrera ci-après.

En général, il n'est pas souhaitable d'augmenter de manière excessive l'épaisseur de la peau compacte de surface. Dans de nombreux cas , et notamment pour les ballons de foot ball , en préfère limiter l'épaisseur de cette peau compacte à 1 mm environ car , avec des épaisseurs plus importantes , on a constaté que la couche externe devenait moins souple et moins élastique , ce qui exerçait une influence désavantageuse sur le comportement général du ballon.

On a obtenu des résultats particulièrement intéressants en mettant en oeuvre pour la réalisation de la couche externe des ballons une mousse à peau intégrale ayant une épaisseur totale d'environ 2 mm avec une peau compacte de 0,5 mm environ . Les caractéristiques physiques ci-après se sont avérées optimales .
- Densité moyenne 0,4 à 0,6 g/cm³
- Dureté Shore échelle A : 30 à 65
- Déchirure amorcée en long supérieure à 5da N/cm, de préférence supérieure à 10 da N/cm
- Déchirure amorcée en travers supérieure à 5 da N/cm ,de préférence à 10 da N/cm,
- Abrasion DIN en mm³ avec charge de 5 N:150 à 250
- Prise d'eau statique tranches libres: 2 à 20%.

Le module élastique de la peau compacte peut varier entre 3,75 N/mm2 et 6N/mm2 environ , alors que dans la zone de la mousse constituant le coeur , ce module d'élasticité est de 1N/mm2 à 2 N/mm² environ . En général , le module d'élasticité de la zone voisine de la surface (peau compacte ) est de 1,5 fois à 2 fois plus élevé que dans la zone de la mousse micro-cellulaire.

Les valeurs physico-mécaniques ont été déterminées, après refente d'une plaque d'essai, sur des éprouvettes de 3 mm d'épaisseur comportant une peau compacte sur une seule face .

La présente invention se prête à l'obtention de n'importe quel type de ballon , de forme ronde ou autre , par exemple ovale ( rugby ) . Elle convient également pour la fabrication des ballons de toute nature , de type cousu main , laminé ou surmoulé . Ainsi, selon des modes particuliers de réalisation, la présente invention a pour objet :
- Des ballons de type cousu main dont le revêtement externe est composé de panneaux destinés à être assemblés et cousus manuellement , caractérisés en ce que les panneaux comprennent une couche externe en mousse à peau intégrale telle que définie ci-dessus ,la peau intégrale étant à l'extérieur et la zone micro-alvéolaire intérieure étant associée à un complexe de tissus techniques. Dans ce type de ballon, la valeur optimale de l'épaisseur de la couche compacte ou peau intégrale est inférieure à 1 mm , par exemple de l'ordre de 0,5 à 1 mm .
- Des ballons de type laminé dont le revêtement exter ne est composé de panneaux laminés , caractérisés en ce que les panneaux comprennent une couche externe en mousse à peau intégrale telle que définie ci-dessus, laquelle est tournée vers l'extérieur , tandis que la zone micro-alvéolaire intérieure est directement appliquée sur une carcasse intérieure connue en elle-même Dans ce type de ballon, l'épaisseur de la peau compacte peut être légèrement supérieure et par exemple atteindre 1,0 mm . Les carcasses intérieures qui ont donné les meilleurs résultats sont constituées , ainsi qu'il est connu, d'une vessie munie d'un enrobage filamentaire,ou réalisée sous forme monocoque, par exemple par la technique de rotomoulage.
- Des ballons de type surmoulé dont le revêtement externe est obtenu par surmoulage d'une carcasse , caractérisés en ce que ledit revêtement comprend une couche externe en mousse à peau intégrale telle que définie ci-dessus , celle-ci étant tournée vers l'extérieur tandis que la zone micro-alvéolaire intérieure est appliquée sur une carcasse connue en elle-même . Dans ce type de ballon , l'épaisseur de la peau compacte peut varier entre 0,5 et 1,5 mm environ . La carcasse peut être de n'importe quel type connu , notamment être constituée d'une vessie entourée d'un enrobage filamentaire ou bien être réa lisée sous forme monocoque , par exemple par la technique de rotomoulage .

Pour les besoins de l'invention, on utilise une mousse à peau intégrale en polyuréthane ou polyuréthane- polyurée répondant aux caractéristéristiques précitées . Les mousses polyuréthanne polyurée sont hautement préférées,car l'homme du métier dispose de nombreuses possibilités pour choisir les composants de telles mousses ainsi que leurs conditions de mise en oeuvre , permettant d'aboutir aux produits ayant les caractéristiques désirées.On trouvera dans la description qui suit des indications et des exemples précis illustrant comment les mousses satisfaisant aux besoins de l'invention peuvent être formulées et réalisées .

On sait qu'en général le système chimique pour la production des mousses de polyuréthanne comprend deux composants essentiels : un polyol , c'est-à-dire un produit présentant des groupes hydroxyles OH actifs et un isocyanate , c'est-à-dire un composé présentant des groupes réactifs NCO.Le polyol peut être du type polyester-polyol ou polyéther- polyol. Dans le premier cas , le polyol est obtenu par polycondensation d'un acide di- ou polycarboxylique sur un composé à groupes hydroxyles, tel qu'un diol et/ou un triol. Les polyéther-polyols sont obtenus par polymérisation à partir d'oxyde d'éthylène et/ou d'oxyde de propylène. Dans les deux cas , polyester-polyol ou polyéther-polyol, ce composant contient des groupes hydroxyles capables de réagir avec les groupements isocyanates du second composant .

Pour le deuxième composant, on peut en principe utiliser n'importe quel isocyanate permettant d'obtenir, par réaction avec le premier composant polyol, les produits désirés . Toutefois, on préfère utiliser un isocyanate prépolymère, c'est-à-dire un isocyanate qui a déjà partiellement réagi avec un polyester-polyol ou un polyéther-polyol. De tels isocyanates prépolymères contiennent une proportion bien définie de groupements NCO libres destinés à réagir avec le composant polyol, cette réaction permettant d'obtenir des groupements uréthanne ou uréthanne/urée. Ainsi, pour les besoins de l'invention , on a constaté qu'on préférait mettre en oeuvre un tel prépolymère à terminaisons NCO.

Etant donné qu'il importe d'obtenir une mousse à peau intégrale , l'homme du métier comprendra qu'avec la formulation de base polyolisocyanate, il faut également mettre en oeuvre d'autres constituants ou moyens permettant d'aboutir à une telle mousse. Un constituant indispensable est un agent d'expansion capable de former les cellules au coeur de la matière micro-alvéolaire. On peut utiliser n'importe quel agent convenant à cet effet , sous forme gazeuse ou sous une forme capable de former un gaz au sein du mélange réactionnel. C'est en général ce dernier mode de réalisation qu'on préfère . Par exemple, on peut utiliser de l'eau distillée,qui est capable de réagir avec les groupements isocyanates pour former du gaz carbonique. D'excellents résultats ont été obtenus avec des composés fluorocarbonés , par exemple ceux disponibles sous la dénomination " FREON " , en particulier du type R11,et R123, ce dernier n'ayant pas d'action néfaste pour l'environnement.

Pour obtenir l'effet de peau qui est désiré, on peut mettre en oeuvre tout constituant et/ou moyen connu à cet effet de l'homme du métier. Un premier moyen consiste à jouer sur la vitesse de réaction du polyol et de l'isocyanate en utilisant un catalyseur . Parmi les catalyseurs, les meilleurs résultats ont été obtenus avec les amines et plus particulièrement encore les amines tertiaires . On peut aussi utiliser des composés organométalliques , par exemple à base d'étain .

Il est usuel également dans la technique de fabrication des mousses de polyuréthanne, d'ajouter à la formulation de base des agents allongeurs de chaînes , qui permettent de faire varier dans le sens désiré les propriétés physiques de la mousse de manière à obtenir les valeurs qui ont été précédemment mentionnées . A titre d'exemples d'allongeurs de chaînes, on peut citer des composés contenant des groupements hydroxyles , qui peuvent réagir avec les groupements isocyanates , de tels composés pouvant être choisis parmi les diols , ainsi que des composés contenant des groupes amines réactifs , par exemple des diamines .

L'homme du métier sait aussi qu'on peut faire appel à des composants dont la fonction est de stabiliser la mousse et par conséquent de régler la dimension des cellules. Il s'agit en général d'huiles de silicone , agissant en tant que tensio-actifs . Par ailleurs , la composition apte à mousser peut contenir divers autres constituants secondaires tels que des antioxydants , des stabilisants contre la dégradation due aux rayonnements(UV) , des préparations pigmentaires suivant les coloris souhaités , des biocides et autres constituants secondaires mais néanmoins utiles pour l'utilisation commerciale.

Un autre moyen connu pour faire varier les propriétés de la mousse à peau intégrale et particulièrement l'épaisseur de la peau compacte de surface ,consiste à agir sur la nature du moule mis en oeuvre pour la formation de la mousse ainsi que sur la température de ce moule. Des effets de peau différents peuvent être atteints en choisissant des moules de conductibilité thermique variée ou en agissant sur la température extérieure du moule, par exemple en le refroidissant Il est d'ailleurs possible de combiner de tels effets avec ceux résultant de l'utilisation de catalyseurs particuliers,qui ont pour fonction, à l'intérieur de la masse en cours de moussage, d'accélérer la réaction, ce qui favorise la formation de la zone microalvéolaire à l'intérieur du produit, tandis que à l'extérieur , la peau intégrale de l'épaisseur désirée se forme contre la paroi du moule .

On voit donc que les moyens sont nombreux pour obtenir les caractéristiques physiques désirées, telles qu'elles ont été mentionnées précédemment. Il importe en effet que la mousse à peau intégrale constituant le produit fini possède les propriétés définies plus haut , de manière à permettre son utilisation à titre de couche externe de ballon . Bien entendu , on peut obtenir des produits ayant des caractéristiques variées en modifiant non seulement la nature des composants de base (polyols, isocyanates, agents d'expansion, catalyseurs , allongeurs de chaînes stabilisateurs de mousse ) mais aussi en choisissant diverses proportions du mélange polyol-isocyanate, par excès ou par défaut par rapport à la stoechiométrie . Les proportions de ce mélange dépendent de la nature du polyol ainsi que de celle de l'isocyanate, en particulier pour ce dernier de sa teneur en groupes NCO libres si, comme on le préfère , on met en oeuvre un prépolymère.

Toutes les indications générales qui viennent d'être données à propos de l'obtention des mousses polyuréthanne ou polyuréthanne-polyurée à peau intégrale sont connues de l'homme du métier Si besoin est , celui-ci peut se reporter à la documentation spécialisée dans ce domaine et notamment aux documents suivants:
KUNSTSTOFF HANDBUCH BECKER/BRAUN

Polyurethan 7-Herausgegeben von Prof. Dr.Gerhard W.BECKER, Berlin und Prof. Dr. Dietrich Braun Darmstadt,Edition Hanser.

KUNSTSTOFF ADDITIVE 2 Ausgabe, herausgegeben von Dr.Reinhard Gächter und Dr. Helmut Müller , BASEL,Edition HANSER.

Ces ouvrages de la littérature technique spécialisée sont introduits à titre de références dans le présent mémoire descriptif .

On donnera maintenant des indications plus précises sur les produits et compositions qui ont donné les résultats les plus satisfaisants pour les besoins de la présente invention .

### Mousses obtenues à partir de polyester-polyol.

### Composant A

(1) Polyesterpolyol obtenu par polycondensation d'un acide dicarboxylique, tel que l'acide adipique, sur un diol, tel que le monoéthylèneglycol, le butane diol, le diéthylèneglycol, et/ou un triol, tel que le triméthylolpropane;
(2) Allongeur de chaîne, choisi par exemple parmi les diols , tels que le monoéthylèneglycol et le butanediol,
(3)catalyseur, tel qu'une amine tertiaire,
(4)Agent d'expansion, par exemple eau distillée ,
(5)Stabilisateur de mousse et de dimension des cellules,par exemple choisi parmi les huiles de silicone .
(6)Stabilisateur UV/antioxydants : choisi par exemple parmi les composés à base de benzophénone ou benzotriazole,
(7)Biocide : composé organique de l'arsenic,
(8)Préparation pigmentaire:par exemple dioxyde de titane pour le blanc.

### Composant B:

Diisocyanate prépolymère obtenu par polyaddition du diphénylméthane 4,4'-diisocyanate et du polyester polyol du composant A .

### Mousses obtenues à partir de polyéther-polyol:

Pour la confection des ballons , conformément à la présente invention, on donne la préférence à ces mousses à base de polyéther-polyol, car elles résistent parfaitement aux dégradations hydrolytiques et cryptogamiques .

### Composant A:

(1) Polyéther polyol, provenant de la polymérisation de l'oxyde d'éthylène et/ou de l'oxyde de propylène,
(2)Allongeur de chaîne, choisi par exemple parmi les diols, tels que le monoéthylèneglycol ou le butanediol et des diamines, telles que la diéthyltoluène diamine (DETDA).
(3)Catalyseur:
   Amine tertiaire ou composé organique de l'étain.
(4)Agent d'expansion:
   eau distillée ou fluorocarbure de type "FREON", par exemple "Fréon R11" ou par exemple "FREON R123"
(5)Stabilisateur de mousse et de dimension des cellules: huiles de silicone .
(6)Stabilisateur U.V. (ou absorbeurs UV)/antioxydant: Benzophénone, benzotriazole, formamidine.
(7)Biocide: composé organique de l'arsenic.
(8)Préparation pigmentaire , par exemple dioxyde de titane pour le blanc .

### Composant B:

Prépolymère de diisocyanate obtenu par polyaddition du diphénylméthane 4,4**'**-diisocyanate et du polyéther polyol du composant A.

Dans la description qui précède, on a donné des indications sur des systèmes à deux composants**,** mais cette forme de présentation n'est nullement critique . L'homme du métier peut utiliser n'importe quelle formulation apte à mousser pour fournir une mousse de polyuréthanne à peau intégrée . Egalement, on a préparé le composant A en introduisant simultanément le polyol avec tous les additifs nécessaires ou utiles à la réaction d'expansion , le composant B étant alors présenté isolément . Mais on sait que d'autres formes de présentation peuvent être adoptées , par exemple en partageant les additifs entre le composant A et le composant B .

Pour l'obtention d'articles en mousse à peau intégrale , on peut utiliser n'importe quelle technique connue disponible à l'heure actuelle dans ce domaine . On connaît déjà en effet des machines travaillant sous pression et en cir cuit fermé.Les composants A et B sont mélangés par une tête doseuse avec une grande précision et sont injectés dans le moule . La réaction de formation de la mousse est fortement exothermique , la température dans le coeur du produit en expansion pouvant atteindre 130 à 180°C , et il se développe dans le moule des pressions de l'ordre de 7 bars / cm² . Il faut donc mettre en oeuvre des outillages métalliques à grande force de fermeture . Etant donné que la température du moule est un paramètre qui conditionne l'épaisseur de la peau intégrale , les outillages de moulage sont conçus de manière à pouvoir tempérer leur température extérieure et à la régler de manière très précise.

L'invention sera encore illustrée sans être aucunement limitée par la description qui suit faite en référence aux dessins annexés sur lesquels :
Fig.1 représente en coupe la structure d'un ballon réalisé conformément à l'invention ;
Fig.2 est une coupe analogue à la figure 1 , illustrant une variante de réalisation;
Fig.3 est une coupe à travers la structure d'une autre variante de ballon conforme à l'invention;
Fig.4 illustre schématiquement un outillage de moule permettant la fabrication de plaques convenant aux besoins de l'invention ;
Fig.5 est une coupe selon la ligne V-V du moule de la figure 4 ;
Fig.6 est une vue de face d'une plaque pouvant être obtenue par moulage ;
Fig.7 est une coupe transversale selon la ligne VII-VII à travers la plaque de la figure 6;
Figs. 8 à 11 illustrent les diverses étapes de fabrication d'un ballon conforme à l'invention

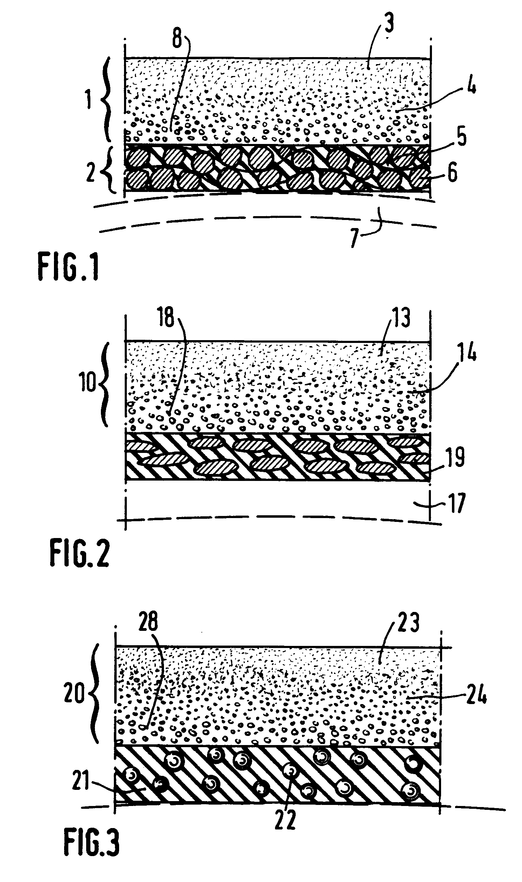

La structure représentée à la figure 1 est celle d'un ballon de type cousu main . La référence 1 désigne une mousse à peau intégrale comprenant, de l'extérieur vers l'intérieur , une peau compacte 3 et une zone microalvéolaire 4. Dans l'exemple choisi , la peau 3 a une épaisseur de 0,5 à 1 mm et la zone microalvéolaire 4 a une épaisseur de 2 à 3 mm . Sur la face intérieure de la zone alvéolaire 4 est appliqué un complexe 2 de tissus techniques 5, 6 . Le tissu 5 est appliqué sur la face microalvéolaire 4 par tout moyen de collage approprié . Par exemple avec une mousse 1 en polyuréthanne , le collage du tissu 5 peut s'effectuer avec un film en polyuréthanne thermofusible à base polyéther . Le tissu technique 6 est à orientation croisée par rapport au tissu 5 , le croisement étant par exemple à 90°. Le complexe 2 de tissus techniques peut avantageusement être saturé de latex naturel pour éviter l'effilochage et conférer la longévité maximale au ballon. Une telle structure peut être associée de manière connue à une vessie 7 par exemple en caoutchouc butyle , en caoutchouc mixte butyle-isoprène ou en latex naturel. On obtient des caractéristiques optimales , en particulier pour éviter la prise d'eau du ballon en choisissant une structure microalvéolaire 4 dans laquelle les cellules sont pratiquement toutes fermées . On notera aussi que,conformément à l'invention , la couche externe du ballon est monolithique, avec un coeur microcellulaire 4 et une peau compacte 3 . La taille et la population des cellules 8 de la couche microalvéolaire 4 vont en décroissant de l'intérieur, c'est-à-dire de la face tournée vers le tissu 5 , vers l'extérieur, jusqu'à devenir compactes en surface Dans l'exemple choisi et représenté, on a illustré un complexe de tissus techniques formé de deux tissus 5, 6 . Il est bien entendu que des dispositions différentes pourraient être adoptées , comme cela est connu de l'homme du métier. Ainsi , on pourrait faire appel à un nombre de tissus de renfort différent de deux , par exemple trois ou davantage . Les meilleurs résultats ont été obtenus avec des tissus formés d'un mélange de coton 35% et polyester 65 %. La liaison de ces diverses couches textiles entre elles est obtenue à l'aide d'adhésif à base de latex .

La figure 2 représente la structure d'un ballon de type laminé ,réalisé conformément à l'invention. Le ballon comprend une couche externe 10 constituée d'une mousse à peau intégrale , avec une zone alvéolaire intérieure 14 com portant des cellules 18 et une peau compacte 13 de surface. Pour les besoins de l'invention, les meilleurs résultats ont été obtenus avec une mousse 10 en polyuréthanne d'environ 3 mm d'épaisseur . Dans ce type de ballon , la couche externe est composée d'un certain nombre de panneaux qui sont collés sur une carcasse conventionnelle. Celle-ci a été illustrée aux dessins comme comprenant une vessie 17 à enrobage filamentaire 19 . Celui-ci est avantageusement constitué d'un monofil en " Nylon ", plus particulièrement " Nylon 6,6" , ou polyester ou mélange PES/P.A., permettant de réaliser l'enroulement multidirectionnel.

La vessie 17 peut être de manière connue réalisée à partir de caoutchouc butyle, butyle-isoprène , mélange butyl/caoutchouc naturel ou mélange butadiène/caoutchouc naturel . Selon l'exemple illustré à la figure 2 , on voit que les panneaux 10 sont directement collés sur la structure interne (vessie 17 + enrobage 19). On a constaté qu'avec des panneaux 10 en mousse de polyuréthanne à peau intégrale , on obtenait ainsi un ballon de football,par exemple, qui bénéficie du même comportement qu'un ballon cousu main de haut de gamme, mais présentant par rapport à celui-ci une longévité exceptionnellement bonne . La fabrication d'un tel ballon est beaucoup plus économique .

On a encore illustré à la figure 3 une variante de ballon réalisé conformément à l'invention , le ballon étant de type surmoulé . Pour son obtention, on surmoule directement une carcasse traditionnelle 21 avec une mousse 20 à peau intégrale . Celle-ci comprend une zone alvéolaire interne 24 à cellules 28 et une peau compacte 23 de surface. On peut utiliser n'importe quel type de carcasse 21, par exemple une vessie en caoutchouc butyle ou butyle-isoprène à enrobage filamentaire , ainsi que cela a été expliqué en référence à la figure 2. Mais on peut aussi avec avantage utiliser une carcasse monocoque , comme cela a été représenté à la figure 3. Par exemple, une telle carcasse peut être réalisée par rotomoulage . Un exemple est un ballon du type à carcasse monocoque interne , comprenant un élastomère contenant une charge d'au moins un composé inorganique dont la forme physique lui confère une faible densité . Il est avantageux que la carcasse soit réalisée en copolymère polyéther-ester . La charge préférée est constituée de verre ou de silice sous forme de microsphérules creuses (désignés par la référence 22 à la figure 3) , remplies d'air et résistant à la compression.

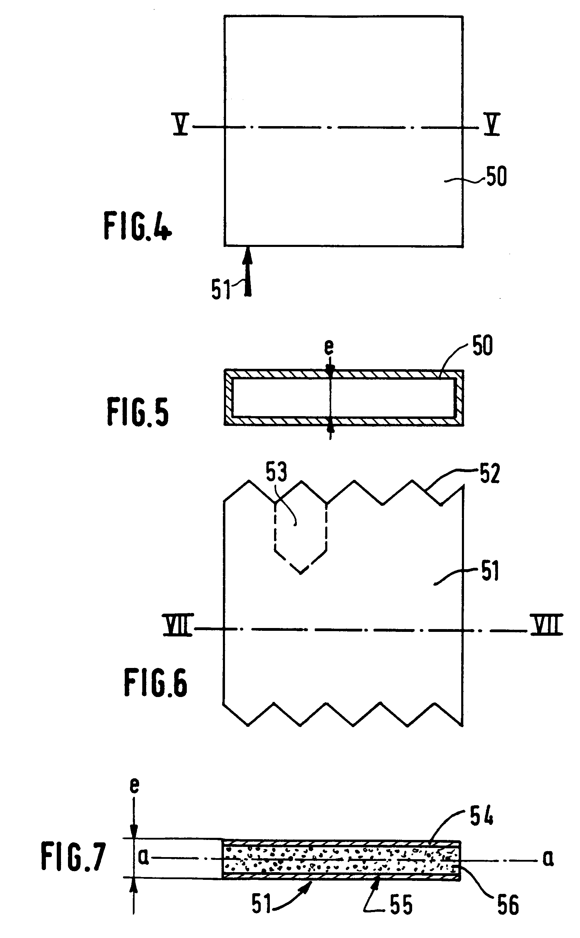

On décrira maintenant en référence aux figures 4 à 7 , une technique de moulage qui convient pour l'obtention de panneaux pouvant être utilisés à titre de couche externe dans les ballons dont les structures ont été illustrées aux figures 1 et 2.

La figure 4 représente, vu de face , un moule d'allure générale rectangulaire, par exemple d'environ 1,2 x 0,6 m.Ce moule 50 est orienté verticalement et l'on prévoit en partie basse au moins un point d'introduction 51 pour la composition apte à mousser . La figure 5 montre en coupe le moule 50 , dont l'épaisseur e est au moins égale au double et par exemple 5 à 6 fois l'épaisseur des panneaux respectifs 1 , 10 des figures 1 et 2 .

La figure 6 illustre un mode avantageux de réalisation selon lequel la plaque 51 moulée comporte des lisières 52 correspondant à la configuration des panneaux 53 à fabriquer . Dans l'exemple considéré ces panneaux 53 sont de forme générale hexagonale . Cette configuration est avantageuse car elle permet de réduire les chutes et d'augmenter les rendements de production . On voit à la figure 7 la structure en coupe de la plaque 51. Son épaisseur e correspond à celle de la cavité intérieure du moule 50 (figure 5) Sur chacune de ses faces 54, 55 , la plaque 51 comporte une peau compacte , tandis que sa zone interne 56 est microalvéolaire , conformément à l'enseignement de la présente invention.Pour l'obtention de plaques unitaires servant à la confection des panneaux du genre des panneaux 1, 10 (figures 1 et 2) , on procède à la coupe des plaques 51 sensiblement selon leur plan médian longitudinal aa .Avec un moule 50 de 1,2 x 0,6 m , on obtient de cette manière 1,44m² de matériau à peau intégrale convenant à la confection des panneaux .

Des panneaux convenant à la fabrication de ballons de type laminé ( figure 2 ) peuvent être ainsi directement confectionnés après découpe, parage des bords , marquage sérigraphique , pour être collés sur la carcasse intérieure. Pour les besoins des ballons cousus main (du type représenté à la figure 1 ) on réalise sur les plaques de moulage en mousse à peau intégrale , le contrecollage des complexes en tissus techniques, avant de procéder à la découpe à l'emporte pièce et au marquage sérigraphique .L'opération finale de réalisation du ballon consiste alors à assembler les divers panneaux par couture manuelle .

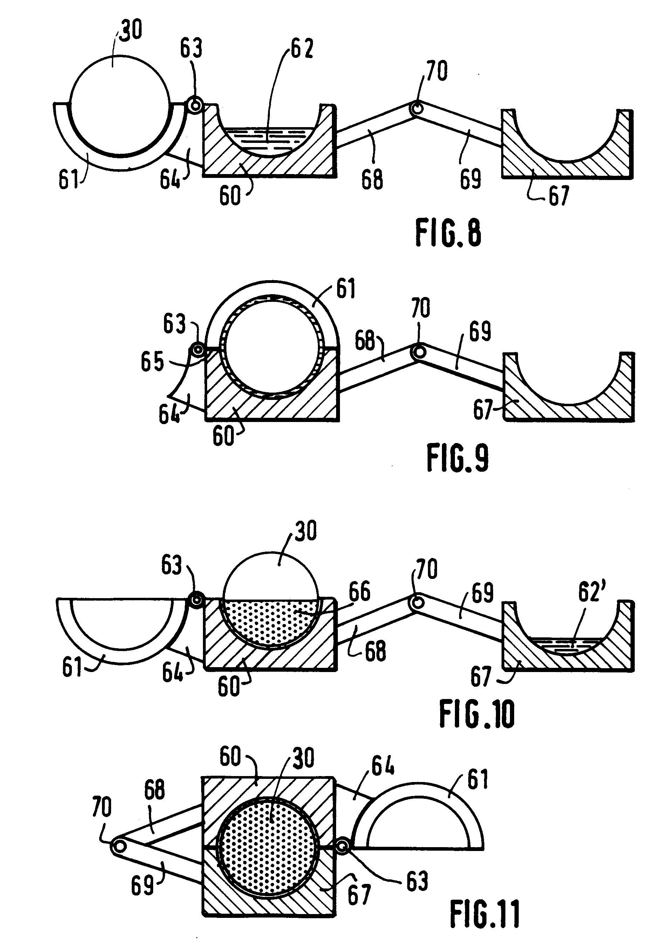

Les figures 8 à 11 illustrent un procédé de fabrication qui convient pour des ballons surmoulés. Ce type de ballon a été illustré à titre d'exemple à la figure 3 . L'outillage illustré à ces figures concerne l'obtention de ballons ronds mais il pourrait bien entendu être adapté à la réalisation d'autres formes . Cet outillage comprend une première partie de moule 60 , dont la cavité intérieure a une étendue correspondant sensiblement à la moitié du volume du ballon à fabriquer . Un couvercle 61 , mobile autour d'une charnière 63 est prévu , également avec un volume interne correspondant sensiblement à la moitié de celui du ballon . Des moyens 64 permettent de fixer de manière amovible le couvercle 61 sur le moule 60. Dans la première étape du procédé , illustré à la figure 8 , la carcasse 30 à surmouler , qui a été préfabriquée,est d'abord mise en place à l'intérieur du couvercle 61 , comme représenté . On met en place à l'intérieur du moule 60 une quantité de composition 62 apte à mousser , correspondant à celle destinée à réaliser la couche externe de la moitié du ballon.

Dans une deuxième étape , illustrée à la figure 9, on ferme le moule 60 avec le couvercle 61. Un joint d'étanchéité 65 est interposé entre les deux parties de moule . Pour assurer une répartition homogène ainsi que l'application de la composition 62 autour de l'hémisphère inférieur du ballon, on applique le vide à l'intérieur du moule , par tout moyen approprié non représenté. Dans une étape consécutive , on ouvre le couvercle 61 pour aboutir à la situation illustrée à la partie gauche de la figure 10. L'hémisphère inférieur de la carcasse 30 est alors recouvert d'une couche externe 66 en mousse à peau intégrale.

Par ailleurs, l'outillage comporte aussi un autre moule 67 identique au moule 60. Ainsi, sa cavité intérieure a un volume correspondant sensiblement à la moitié de celui du ballon à obtenir. Une fois atteinte la situation représentée à la figure 10 , on dispose dans le moule 67 une quantité 62'de la même composition apte à mousser que celle (62) utilisée précédemment dans le moule 60. C'est alors le moule 60 qui va servir de contre moule pour obturer le moule 67 et aboutir à la position représentée à la figure 11.A cet effet, la liaison entre les moules 60 et 67 doit être assurée par tout moyen convenable pour permettre l'application l'une sur l'autre des deux parties de moule . Les dessins illustrent une réalisation possible avec un système de barres 68 , 69 articulées en 70 et reliées respectivement aux moules 60 et 67. Pour aboutir à la position illustrée à la figure 11 , il suffit de faire pivoter autour de l'articulation 70 l'ensemble de moule 60 avec son couvercle 61 qui se trouve alors ouvert . Pour obtenir le ballon surmoulé final , il convient d'appliquer le vide à l'intérieur du moule constitué par les deux demi-moules 60, 67 .De cette manière , la composition 62' apte à mousser se répartit autour de l'hémisphère supérieur de la carcasse 30, pour constituer la couche externe en mousse à peau intégrale. Il suffit ensuite d'ouvrir le moule pour retrouver la position de l'outillage illustrée à la figure 8 . Le ballon terminé est alors du type général illustré à la figure 3.

Le surmoulage peut également être réalisé par injection en moule fermé par tête doseuse d'une machine d'injection haute ou basse pression à circuit fermé.

On observera que si la description qui précède concerne l'obtention d'un ballon surmoulé avec une carcasse monocoque , le même procédé peut aussi être appliqué pour le surmoulage direct de carcasses traditionnelles comportant une vessie en caoutchouc butyle ou en caoutchouc butyle-isoprène avec enrobage filamentaire multidirectionnel. Dans tous les cas , la composition apte à mousser est suffisamment réactive pour adhérer sur la carcasse sans l'intervention d'un adhésif .

Les mousses à peau intégrale en polyuréthanne - polyurée qui confèrent au ballon obtenu une longévité exceptionnelle .L'homme du métier comprendra aisément que le processus de fabrication illustré aux figures 8 à 11 présente un avantage économique certain par rapport à celui qui consiste à coudre ou à coller un à un des panneaux .

On observera également que l'invention convient pour l'obtention de ballons de tous genres et pour toutes les disciplines habituelles , que ce soit pour les sports en plein air ou en salle , les loisirs , la forme du ballon étant également indifférente.

On a encore illustré davantage la présente invention par des exemples précis pour sa mise en oeuvre concernant les meilleurs modes de réalisation en vue de l'obtention de mousses polyuréthanne-polyurée à peau intégrale .

### EXEMPLES1 à 6 :

Dans les exemples ci-après , on a fabriqué des mousses polyuréthanne ou polyuréthanne polyurée à peau intégrale à partir de polyester-polyol On a utilisé un système à deux composants, un composant A contenant le polyester-polyol et tous les constituants de la composition , à l'exception du constituant isocyanate et un composant B constitué par ledit isocyanate.Les paramètres opératoires étaient les suivants:
Proportions de mélange A/B : 80 : 100 à 126 : 100, en poids.
Températures lors de la mise en oeuvre :
- composant A 50°C
- composant B 40°C

Température du moule : 40 à 60°C
Vitesse de réaction :
- Départ de réaction 6 à 10 sec.
- Temps d'expansion 30 à 35 sec.
- Temps de réaction 35 à 40 sec.
- Temps de maintien total dans le moule : 2,5 à 5 mn

Viscosité des composants lors de la mise en oeuvre:
- composant A 1200 cps
- composant B 850 cps

### EXEMPLE 1

Le composant A utilisé répondait à la composition suivante :
polyester-polyol : 84,39% parties en poids .

Ce polyester-polyol était le produit mis sur le marché sous la dénomination Estolan P 201 par la Société Lankro et possédait la nature et les caractéristiques suivantes :
Butanediol 1,4 (allongeur de chaîne)11,5% parties en poids
Catalyseur )DABCO (amine) 0,59% parties en poids )POLYCAT 41 0,040%
Agent d'expansion : eau distillée 0,38% parties en poids .
Agent régulateur des cellules: 0,25% parties en poids

Ce produit était une huile de silicone mise Société Dow Corning.
Absorbeur de rayonnement UV: 1,15% parties en poids

Il s'agissait d'un produit fourni par la Société Ciba Geigy , résultant du mélange de trois absorbeurs d'UV dans les rapports suivants:
- Tinuvin P: : 2
- Tinuvin 765: : 2
- Irganox 245: : 1
- Biocide: :0,70% parties en poids

Il s'agissait du produit mis sur le marché par la Société Morton Thiokol sous la dénomination Vinyzene BPS 2 PG ,

Pigment blanc (dioxyde de titane): 1 partie en poids.

Tous les ingrédients ci-dessus ont été mélangés sous forme d'une formulation unique permettant de réaliser le composant A du système à deux composants destiné à former la mousse de polyuréthanne - polyurée .

Le composant B est un prépolymère isocyanate mis sur le marché par la Société Lankro sous la dénomination B 3001. Les composants A et B ont été mélangés à raison de 115 parties de composant A pour 100 parties de composant B, selon le mode opératoire général indiqué précédemment .

On a ainsi obtenu une mousse de polyuréthanne-polyurée à peau intégrale convenant aux besoins de l'invention pour la fabrication des ballons .

### EXEMPLE 2

On a obtenu des résultats similaires en remplaçant, dans le composant A , le polyol Estolan P 201 par le polyester-polyol Estolan P 179 de la Société Lankro , utilisé en quantité pondérale équivalente .

### EXEMPLE 3

On a obtenu des résultats similaires à ceux des exemples 1 et 2 en remplaçant, dans le composant A , le butanediol 1,4 utilisé en tant qu'agent allongeur de chaîne, par du monoéthylèneglycol, utilisé en quantité pondérale équivalente.

### EXEMPLE 4

On a obtenu des résultats similaires en remplaçant, dans le composant A des exemples 1 à 3 précédents , le catalyseur amine Dabco , en proportion pondérale équivalente par l'un des catalyseurs suivants , ayant la nature et les caractéristiques respectives indiquées ,de la Société Air Products and Chemicals (USA).

### Polycat 41: Catalyseur liquide à pH basique

Densité : 0,91 - 0,95 à 25°C
Viscosité (Brookfield) 26,5 centipoises à 38°C
Tension de vapeur: 0,1 mmHg à 141°C
Point éclair en coupole fermée (ASTM D 56-70) 104°C.

### Polycat SA 102:

Catalyseur liquide
Densité : 1,017 à 25°C
T°C ébullition : 291 - 292°C
T°C solidification: 1 - 2°C
Viscosité (Brookfield) 3749 cps à 25°C
Tension de vapeur : 2,1 mmHg à 38°C
Point éclair en coupole fermée: 94°C.

### EXEMPLE 5

1 On a obtenu des résultats similaires à ceux des exemples 1 à 4 en remplaçant , dans la formulation du composant A , l'agent absorbeur de rayon UV, le Tinuvin P par des parties pondérales équivalentes des produits ci-après :
- Tinuvin 765: 2
- Tinuvin P: 2
- Irganox 245: 1

### EXEMPLE 6:

On a obtenu des résultats similaires à ceux des exemples 1 à 5 en remplaçant dans le composant A le régulateur de cellules DC 193 par une quantité pondérale équivalente du régulateur de cellules LK 221 mis sur le marché par la Société Air Products.

### EXEMPLES 7 à 14:

Dans les exemples qui suivent,on a réalisé des mousses polyuréthanne-polyurée à peau intégrale en partant de polyéther- polyol ,qui sont très intéressantes pour la fa brication des ballons.

Les paramètres opératoires généraux de ces exemples sont les suivants :
Proportions de mélange A/B 80: 100 à 110 : 100,en poids .
Températures lors de la mise en oeuvre :
- Composant A 35°C
- Composant B 35°C

Température du moule :
40 à 50°C
Vitesse de réaction :
- Départ de réaction: 10 à 15 sec.
- Temps d'expansion: 30 à 35 sec.
- Temps de réaction: 35 à 45 sec.
- Temps de maintien total dans le moule : 2,5 à 5 mn.

Viscosité des composants lors de la mise en oeuvre:
- Composant A à 35°C 600 cps
- Composant B à 35°C 630 cps

### EXEMPLE 7 :

On a préparé un composant A avec la composition ci-après :
Polyéther-polyol : 85,0 parties en poids

Il s'agissait du produit Propylan D 4012 mis sur le marché par la Société Lankro.
- Allongeur de chaîne :: butanediol 1,4:9,5 parties en poids
DETDA : 1,4 parties en poids soit 10,9 parties en poids au total
- Catalyseurs:: 0,35 Dabco )parties en poids
0,050 Polycat 41 )
0,080 Fomrez UL 32)
- Agent d'expansion:: 0,70 parties en poids.

Dans ce cas, il a été procédé à une expansion chimique avec de l'eau.

Absorbeur UV :
Mélange TINUVIN P )
TINUVIN 765) 1,15 parties en poids
IRGANOX 245)

Il s'agit de l'un quelconque des produits déjà définis précédemment : Tinuvin P , Tinuvin 765 ou Irganox 245(antioxydant ) .
Régulateur de cellules :0,25 parties en poids

Il s'agissait de l'un des produits DC 193 ou LK 221 déjà définis précédemment .

Biocide 0,500 parties en poids
(produit Vinyzène BP 5 2 PG déjà défini).
Pigment : dioxyde de titane (pigment blanc) 1,0 partie en poids

A 107 parties en poids de ce composant A , on a mélangé 100 parties en poids d'un isocyanate consistant en le produit Quasilan RB 1384 mis sur le marché par la Société Lankro , sous forme d'un prépolymère isocyanate .

On a obtenu des mousses de polyuréthanne-polyurée à peau intégrale pouvant servir très avantageusement de couches externes pour la confection des ballons .

### EXEMPLE 8

On a obtenu des résultats similaires à ceux de l'exemple 7 en remplaçant dans le composant A de cet exemple le polyéther-polyol Propylan D 4012 par des proportions pondérales équivalentes du polyéther-polyol mis sur le marché sous la dénomination Propylan M 111 par la Société Lankro .

### EXEMPLE 9

On a obtenu des résultats similaires à ceux des exemples 7 et 8 en remplaçant , dans la composition du com20 posant A , le butanediol 1,4 à titre d'allongeur de chaîne par une quantité pondérale équivalente de monoéthylèneglycol .

### EXEMPLE 10

On a obtenu des résultats similaires à ceux des exemples 7 à 9 en utilisant dans la composition du composant A , à titre d'allongeur de chaîne , le produit diamine mis sur le marché sous la dénomination Detda par la Société Ethyl Corporation ayant les caractéristiques suivantes:
Produit liquide
- Poids moléculaire: : 178,28
- Densité: : 1,022 g/cm³ à 20°C
- Viscosité (Brookfield): : 326 cps à 20°C.

### EXEMPLE 11

On a obtenu des résultats similaires à ceux des exemples 7 à 10 en remplaçant le catalyseur Dabco , dans la composition du composant A, par des quantités pondérales équivalentes des catalyseurs Polycat 41 et Polycat SA 102 déjà définis.

### EXEMPLE 12

On a obtenu des résultats similaires à ceux des exemples 7 à 11 précédents en utilisant à titre de catalyseur , un composé organique à base d'étain , mis sur le marché sous la dénomination Fomrez UL 32 par la Société Witco , répondant aux caractéristiques suivantes :
Produit liquide
Densité : 0,97 g/cm³
Tension de vapeur : 1mmHg à 20°C
Point éclair (méthode UDED): 205°C

### EXEMPLE 13

On a obtenu des résultats similaires à ceux des exemples 7 à 12 précédents en utilisant à titre d'agent d'expansion un autre dérivé chlorofluoré du méthane en combinaison avec de l'H₂O à savoir :
0,40 H₂O ) parties en poids
5,00 Frigon 11S (Fréon))

Il s'agit là d'un procédé d'expansion semi-chimique et semi-physique.

### EXEMPLE 14

On a obtenu des résultats similaires à ceux des exemples 7 à 13 précédents en utilisant à titre d'agent d'expansion une quantité pondérale équivalente d'eau dis tillée .

Les indications ci-dessus ne sont données qu'à titre indicatif pour guider l'homme du métier mais de nombreuses variantes de formulation peuvent être adoptées pour aboutir à des mousses de polyuréthanne ou polyuréthanne-polyurée convenant aux besoins de la présente invention.

On a constaté pratiquement que l'utilisation des mousses de polyuréthanne à peau intégrale comme couche externe pour les ballons de sports procurait de très nombreux avantages . Les ballons ainsi obtenus réunissent les qualités optimales que l'on peut souhaiter pour ce genre de produits .
1) Compressibilité grâce à la couche micro-cellulaire: ce qui offre une excellente touche de balle (souple - agréable à la frappe) au contact du ballon et facilite le travail technique de balle; le dosage de sa course et de la distance devient aisé.
2)Structure en majeure partie à cellules closes:très faibles prise d'eau et évolution de poids par temps pluvieux (bonne imperméabilité ).
3)Elasticité et mémoire lors de tirs à grande distance . Le ballon dispose de ressources exceptionnelles.
4)Bonne stabilité au froid, d'où faible modification de la dureté en fonction de la température: le ballon conserve sa souplesse et ses ressources en saisons hivernales.
5)Bon lissé de surface, l'écoulement du flux d'air est quasi laminaire sur le ballon lors de volées à grande vitesse .
6)Très haute résistance à l'usure, à l'écorchure et à l'entaille. Les ballons réalisés avec le produit considéré procurent des résultats sans précédent quant à leur longévité .
7)Excellente résistance aux chocs et à la fatigue par flexions répétées.
8)Pas de dégradations hydrolytiques ou microbiologi ques .
9)Grande affinité chimique avec les différents systèmes d'encres sérigraphiques, ce qui facilite les décorations extérieures des ballons. Les impressions sérigraphiques (l'on préférera ici les systèmes à base de polyuréthanne) de par leur grande affinité chimique, font également preuve d'une durabilité inégalée par rapport à d'autres matériaux usuels connus dans la fabrication des ballons .
10)Possibilité de concevoir tous coloris (même fluorescents ) et reliefs de surface (grains divers imitants le cuir naturel ou profils spéciaux pour améliorer le grippant de surface, le nombre de Reynolds, etc),
11)Excellente symétrie d'allongement multidirectionnelle permettant l'obtention de ballons très sphériques avec une bonne reproductibilité même en fabrications industrielles .

Les signes de référence insérés après les caractéristiques techniques mentionnées dans les revendications, ont pour seul but de faciliter la compréhension de ces dernières, et n'en limitent aucunement la portée.

## Revendications

1. Ballons de sports ou de loisirs comprenant une couche externe, caractérisés en ce que ladite couche externe (1, 10, 20) est en mousse à peau intégrale de polyu - réthanne ou de polyuréthanne-polyurée ayant une épaisseur totale comprise entre environ 1,5 et environ 5 mm, la peau compacte de surface (3, 13, 23) ayant une épaisseur comprise entre 0,5 et 2 mm environ.

2. Ballons selon la revendication 1, caractérisés en ce que l'épaisseur totale de la couche externe (1, 10, 20) varie entre environ 1,5 et 3 mm environ.

3. Ballons selon l'une des revendications 1 ou 2, caractérisés en ce que l'épaisseur de la peau compacte de surface (3,13,23) est comprise entre environ 0,5 et 1 mm environ.

4. Ballons selon l'une quelconque des revendications 1 à 3, caractérisés en ce que la densité moyenne de la peau compacte (3, 13, 23) varie entre 0,9 et 1,2 g/cm³ alors que la densité de la zone (4, 14, 24) constituant le coeur microcellulaire varie de 0,3 à 0,9 g/cm³ , la densité moyenne de la couche externe (1,10,20) variant entre 0,4 et 0,6 g/cm³ environ.

5. Ballons selon l'une quelconque des revendications 1 à 4 , caractérisés en ce que la structure microcellulaire (4, 14,24) comporte des spores (8, 18, 28) très peu communiquants et de préférence fermés dans leur grande majorité.

6. Ballons selon l'une quelconque des revendications 1 à 5, comportant une couche externe (1,10, 20) répondant aux caractéristiques physiques ci-après:
- Densité moyenne 0,4 à 0,6 g/cm³.
- Dureté Shore échelle A : 30 à 65
- Déchirure amorcée en long : supérieure à 5 daN/cm,de préférence supérieure à 10 daN/cm,
- Déchirure amorcée en travers supérieure à 5 da N/cm, de préférence supérieure à 10 daN/cm ,
- Abrasion DIN en mm³ avec charge de 5 N:150 à 250
- Prise d'eau statique tranches libres:2 à 20%.

7. Ballons selon l'une quelconque des revendications 1 à 6, caractérisés en ce que le module d'élasticité de la peau compacte (3,13,23) varie entre 3,75 et 6Nmm² alors que celui de la zone microalvéolaire (4,14,24) constituant le coeur de la mousse varie de 1 à 2 Nmm² environ.

8. Ballons selon l'une quelconque des revendications 1 à 7,de type cousu main, dont le revêtement externe est composé de panneaux destinés à être assemblés et cousus manuellement , caractérisés en ce que les panneaux comprennent une couche externe(1) en mousse à peau intégrale ,la peau intégrale(3) étant à l'extérieur et la zone microalvéolaire intérieure (4) étant associée à un complexe (2) de tissus techniques ( 5, 6).

9. Ballons selon l'une quelconque des revendications 1 à 7, de type laminé, dont le revêtement externe est composé de panneaux laminés, caractérisés en ce que les panneaux comprennent une couche externe (10) en mousse à peau intégrale(13), laquelle est tournée vers l'extérieur , tandis que la zone microalvéolaire intérieure (14) est directement appliquée sur une carcasse intérieure connue en elle-même , par exemple une vessie (17) munie d'un enrobage filamentaire(19) ou bien réalisée sous forme monocoque, par exemple par la technique de rotomoulage .

10. Ballons selon l'une quelconque des revendications 1 à 7,de type surmoulé,dont le revêtement externe est obtenu par surmoulage d'une carcasse , caractérisés en ce que ledit revêtement comprend une couche externe (20) en mousse à peau intégrale (23), celle-ci étant tournée vers l'extérieur tandis que la zone microalvéolaire intérieure (24) est appliquée sur une carcasse connue en elle-même , notamment constituée d'une vessie entourée d'un enrobage filamentaire ou bien réalisée sous forme monocoque (21), par exemple par la technique de rotomoulage .

11. Ballons selon l'une quelconque des revendications 1 à 10 , caractérisés en ce que la couche externe en polyuréthanne ou en polyuréthanne-polyurée à peau intégrale , est obtenue à partir d'une composition apte à mousser à base de polyester-polyol ou de polyéther-polyol, ce dernier étant préféré.

## Patentansprüche

1. Sport- oder Spielbälle mit einer Außenschicht,
**dadurch gekennzeichnet**,
daß die Außenschicht (1, 10, 20) aus einem Integralschaum aus Polyurethan oder Polyurethan-Polyharnstoff mit einer Gesamtdicke zwischen etwa 1, 5 und etwa 5 mm besteht, wobei die kompakte Haut (3, 13, 23) der Oberfläche eine Dicke zwischen etwa 0,5 und 2 mm hat.

2. Bälle nach Anspruch 1,
**dadurch gekennzeichnet**,
daß die Gesamtdicke der Außenschicht (1, 10, 20) zwischen etwa 1,5 und etwa 3 mm liegt.

3. Bälle nach Anspruch 1 oder 2,
**dadurch gekennzeichnet**,
daß die Dicke der kompakten Haut (3, 13, 23) der Oberfläche zwischen etwa 0,5 und etwa 1 mm liegt.

4. Bälle nach einem der Ansprüche 1 bis 3,
**dadurch gekennzeichnet**,
daß die mittlere Dichte der kompakten Haut (3, 13, 23) zwischen 0,9 und 1,2 g/cm³ beträgt, während die Dichte der Zone (4, 14, 24), welche die mikrozelluläre Innenschicht bildet, von 0,3bis 0,9 g/cm³ beträgt und die mittlere Dichte der Außenschicht (1, 10, 20) zwischen etwa 0,4 und 0,6 g/cm³ schwankt.

5. Bälle nach einem der Ansprüche 1 bis 4,
**dadurch gekennzeichnet**,
daß die mikrozelluläre Struktur (4, 14, 24) Poren (8, 18, 28) aufweist, die nur sehr wenig miteinander in Verbindung stehen und vorzugsweise in ihrer grossen Mehrheit geschlossen sind.

6. Bälle nach einem der Ansprüche 1 bis 5 mit einer Außenschicht (1, 10, 20) mit folgenden physikalischen Eigenschaften:
- mittlere Dichte 0,4 bis 0,6 g/cm³
- Shore-Härte A 30 bis 65
- in Längsrichtung eingeleitete Anrißempfindlichkeit: Über 5 daN/cm, vorzugsweise über 10 daN/cm
- in Querrichtung eingeleitete Anrißempfindlichkeit: Über 5 daN/cm, vorzugsweise über 10 daN/cm
- Abriebfestigkeit nach DIN in mm3 mit einer Belastung von 5 N : 150 bis 250
- statische Wasseraufnahme, freie Kanten: 2 bis 20 %

7. Bälle nach einem der Ansprüche 1 bis 6,
**dadurch gekennzeichnet**,
daß der Elastizitätsmodul der kompakten Haut (3, 13, 23) sich zwischen 3,75 und 6 N/mm² bewegt, während derjenige der mikrozellulären Zone (4, 14, 24), welche die Innenschicht des Schaumstoffes bildet, etwa 1 bis 2 N/mm² beträgt.

8. Bälle nach einem der Ansprüche 1 bis 7 der handgenähten Machart, bei denen die Außenumhüllung aus Feldern zusammengesetzt ist, die aneinandergesetzt und manuell vernäht sind,
**dadurch gekennzeichnet**,
daß die Felder eine Außenschicht (1) aus einem Integralschaum aufweisen, wobei die integrale Haut (3) nach außen weist und die mikrozelluläre Innenzone (4) an ein Gebilde (2) aus technischem Gewebe (5, 6) gebunden ist.

9. Bälle nach einem der Ansprüche 1 bis 7 mit einem Laminataufbau, bei denen die Außenumhüllung aus laminierten Feldern zusammengesetzt ist,
**dadurch gekennzeichnet**,
daß die Felder eine Außenschicht (10) aus einem Integralschaum mit einer nach außen weisenden integralen Haut (13) aufweisen, wobei die mikrozelluläre Innenzone (14) direkt auf eine an sich bekannte Innenhülle aufgebracht ist, beispielsweise eine durch eine Garnumhüllung (19) umkleidete Blase (17) oder eine einstückige, beispielsweise im Schleudergießverfahren hergestellte Blase.

10. Bälle nach einem der Ansprüche 1 bis 7 mit einer Außenbeschichtung, bei denen die Außenumhüllung durch Beschichten einer Innenhülle erhalten wird,
**dadurch gekennzeichnet**,
daß die Umhüllung eine Außenschicht (20) aus einem Integralschaum mit einer nach außen weisenden integralen Haut (23) aufweist, wobei die mikrozelluläre Innenzone (24) auf eine an sich bekannte Innenhülle aufgebracht ist, die insbesondere aus einer durch eine Garnumhüllung umkleidete Blase oder aus einer einstückigen Blase (21), beispielsweise im Schleudergießverfahren hergestellt, besteht.

11. Bälle nach einem der Ansprüche 1 bis 10,
**dadurch gekennzeichnet**,
daß die Außenschicht aus Polyurethan oder Polyurethan-Polyharnstoff in Form eines Integralschaumes ausgehend von einer schäumfähigen Zusammensetzung auf der Basis von Polyester-Polyol oder, vorzugsweise, von Polyäther-Polyol erhalten wurde.

## Claims

1. Sports or leisure balls having an external layer characterized in that said external layer (1,10,20) is a foam with an integral skin in polyurethane or in polyurethane-polyurea having a whole thickness between about 1.5 and about 5 mm, the surface compact skin (3,13,23) having a thickness between about 0.5 to about 2 mm.

2. Balls according to claim 1, characterized in that the whole thickness of the external layer (1,10,20) is between 1.5 to about 3 mm.

3. Balls according to one of claims 1 or 2, characterized in that the thickness of the surface compact skin (3,13,23) is between about 0.5 to about 1 mm.

4. Balls according to any one of claims 1 to 3, characterized in that the average density of the compact skin (3,13,23) is of about 0.9 to 1.2 g/cm³, while the density of the zone (4,14,24) constituting a microcellular core is of about 0.3 to 0.9 g/cm³, the average density of the external layer (1,10,20) being between about 0.4 and 0.6 g/cm³.

5. Balls according to any one of claims 1 to 4 characterized in that the microcellular structure (4,14,24) comprises cells (8,18,28) which are substantially non communicating and preferably closed in their majority.

6. Balls according to any one of claims 1 to 5 comprising an external layer (1,10,20) having the following physical characteristics :
- average density 0.4 to 0.6 g/cm³
- shore hardness scale A : 30 to 65
- cut started along the length : higher than 5 daN/cm, preferably higher than 10 daN/cm
- cut started transversaly : higher than 5 daN/cm, preferably higher than 10 daN/cm
- DIN abrasion in mm³ with a load of 5 N : 150 to 250
- Static water capture with free slices : 2 to 20%.

7. Balls according to any one of claims 1 to 6 characterized in that the elasticity modulus of the compact skin (3,13,23) is of about 3,75 and about 6 N mm² while said modulus of the microcellular zone constituting the foam core is of about 1 to about 2 N mm²

8. Balls according to any one of claims 1 to 7 of the hand sewn type, having an external coating formed by panels to be assembled and sewn manually, characterized in that the panels comprise an external layer (1) in foam with integral skin, the integral skin (3) being at the outside and the internal microcellular zone (4) is associated to a complex (2) of technical fabrics (5,6).

9. Balls according to any one of claims 1 to 7 of the laminated type, having an external coating constituted by laminated panels, characterized in that the panels comprise an external layer (10) in foam with integral skin (13) directed towards the exterior while the internal microcellular zone (14) is applied directly on an internal carcass known per see, for example a bladder (17) provided with a filamentary coating (19) or made as a single shell, for example by the rotomolding technique.

10. Balls according to any one of claims 1 to 7 of the overmolded type having an external coating obtained by overmolding a carcass, characterized in that said coating has an external layer (20) in foam with integral skin (23) which is directed towards the exterior while the internal microcellular zone (24) is applied on a carcass known per see, comprising particularly a bladder surrounded by a filamentary coating or made as a simple shell (21), for example by the rotomolding technique.

11. Balls according to any one of claims 1 to 10,characterized in that the external layer in polyurethane or in polyurethane-polyurea with integral skin is obtained from a composition liable to foam comprising a polyester-polyol or a polyether-polyol said last compound being preferred.
